# EUROPEAN PATENT APPLICATION

(11) **EP 1 153 685 A1**
(43) Date of publication of application: **14.11.2001**
(21) Application number: 01304058.9
(22) Date of filing: 03.05.2001
(51) Int. Cl.: B23C 5/10

(54) **Multi-fluted milling cutter**

(30) Priority: 10.05.2000 GB 0011215
(71) Applicant: ROLLS-ROYCE plc, London, SW1E 6AT (GB)
(72) Inventor: Church, Richard, Knowle, Bristol BS14 9ED (GB); Hill, Christopher Peter, Thornbury, Bristol BS35 1HX (GB); Watkins, James Rodney, Stoke Bishop, Bristol BS34 6BS (GB)
(74) Representative: Bird, Vivian John

(57) **Abstract**

A rotary cutting tool formed with at least twenty helical cutting teeth.

## Description

The invention concerns rotary cutting tools.

In particular the invention relates to a milling cutter having an increased number of cutting flutes formed on the cutter.

According to the present invention a rotary cutting tool is provided with at least twenty helical cutting teeth.

A rotary cutting tool of the kind referred to may have up to 100 helical cutting teeth and may be even more. Expressed in another format, a rotary cutting tool in accordance with the present invention has a ratio of the number of cutting teeth to tool diameter in millimetres of about 1.5:1 or higher.

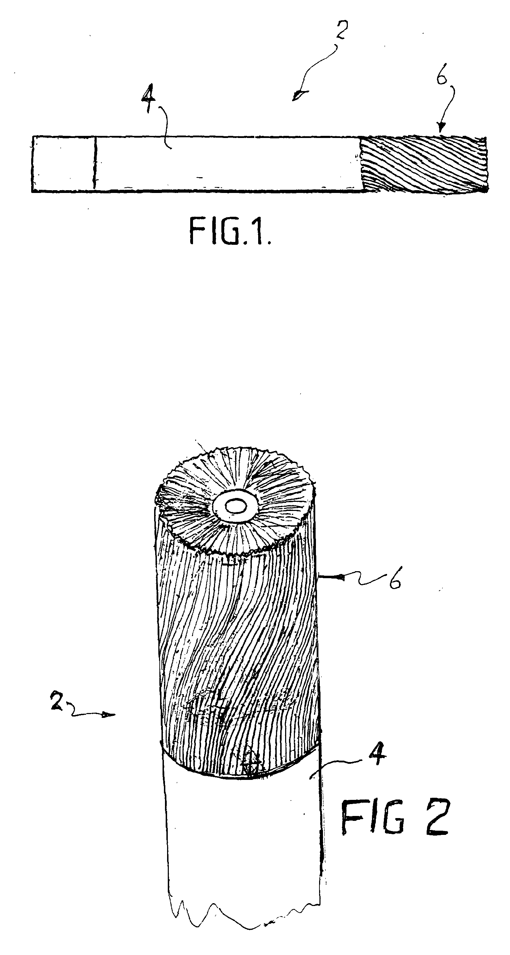

The invention will now be described in more detail with reference to a milling cutter depicted in Figures 1 and 2 of the accompanying illustration which possesses fifty cutting teeth.

The milling cutter shown has an essentially conventional configuration comprising a hardened steel tool 2 of about 16 mm diameter circular cross-section. Smooth sided along most of its length 4, towards its cutting end 6 it is formed with a multiplicity of helically formed cutting flutes. The particular cutter shown has 50 cutting flutes, but it has been found beneficial for milling a variety of materials (metals and metal alloys) to use cutters formed with a multiplicity of cutting flutes the number of which are in the range of 20 up to 100 depending upon the material.

It is envisaged that 100 is not a strict upper limit for the number of flutes and that still higher numbers may be useful. Further improvements which may assist include the use of high pressure coolant and low friction coatings. The rotary cutting tool being described is found to be particularly effective when used in conjunction with the high speed milling method described in our co-pending GB Patent Application No 0011315.9 (priority application).

The depth of the flutes, helix geometry and cutting parameters are also important parameters. The number of flutes and the depth of each for swarf evacuation appears to have an optimum number for each material being cut. Unless the milling cutter is used for slotting, very deep flutes are not essential and shallower flutes means that the number of cutting helixes can be higher. However, it also means that each cut is shallower. A reasonable radial depth of cut needs to be maintained to maintain a reasonable metal removal rate. Some metals tend to form chips or scallops of a characteristic size which may be used as an indicator. The depth of cut, the number of flutes, the speed of cutter rotation all combine to yield the material removal rate. Coolant pressure, particularly high coolant pressure delivery at tens of bar pressure, and cutter coatings also make significant contributions to milling cutter overall efficiency.

The principles of the invention may also be extended to include drilling tools so that a drill may be formed having not two cutting helixes, as in conventional drills, but having a much larger number at least twenty or so cutting helixes. Also the invention may be applied to all types of shaped cutters for example: side mills, end mills, ball end cutters and formed cutters etc. The cutting tool illustrated in the drawings is a side mill, those familiar with the art will be aware of the differences between this and the other kinds of tool mentioned.

## Claims

1. A rotary cutting tool formed with at least twenty helical cutting teeth.

2. A rotary cutting tool as claimed in claim 1 formed with a multiplicity of cutting teeth in the range of about 20 to at least 100.

3. A rotary cutting tool as claimed in either claim 1 or claim 2 wherein the ratio of the number of cutting teeth to tool diameter in millimetres is about 1.5:1 or higher.

4. A rotary cutting tool substantially as hereinbefore described with reference to the accompanying drawings.
